## Europäisches Patentamt
## European Patent Office
## Office européen des brevets

(11) Publication number: **0 031 973**
**A2**

(12) **EUROPEAN PATENT APPLICATION**

(21) Application number: **80201171.8**

(22) Date of filing: **08.12.80**

(51) Int. Cl.³: **G 01 B 11/24**
**G 01 B 9/04**

(30) Priority: **13.12.79 GB 7942952**

(43) Date of publication of application:
**15.07.81 Bulletin 81/28**

(84) Designated Contracting States:
**DE FR GB IT SE**

(71) Applicant: **PHILIPS ELECTRONIC AND ASSOCIATED INDUSTRIES LIMITED**
**ARUNDEL GREAT COURT 8 Arundel Street**
**London WC2R 3DT(GB)**

(84) Designated Contracting States:
**GB**

(71) Applicant: **N.V. Philips' Gloeilampenfabrieken**
**Pieter Zeemanstraat 6**
**NL-5621 CT Eindhoven(NL)**

(84) Designated Contracting States:
**DE FR IT SE**

(72) Inventor: **Jones, Barry Morris**
**Philips Research Laboratories**
**Redhill Surrey RH1 5HA(GB)**

(72) Inventor: **Paterson, David**
**Philips Research Laboratories**
**Redhill Surrey RH1 5HA(GB)**

(72) Inventor: **Saraga, Peter**
**Philips Research Laboratories**
**Redhill Surrey RH1 5HA(GB)**

(74) Representative: **Boxall, Robin John et al,**
**Philips Electronic and Associated Ind. Ltd. Patent Department Mullard House Torrington Place**
**London WC1E 7HD(GB)**

(54) **Object measuring arrangement.**

(57) The invention relates to the control of the automatic assembly of products from piece parts or objects, under the control of a computer supplied with a visual input of the assembly area. A considerably simplification of the computer programme can be made if the dimensions of an object 4 appearing in the visual input can be measured independently of their position within a working volume having linear dimensions several times those of the object. An optical parallel projection system is provided, having a large diameter fresnel lens 5 and an objective lens 8, in which a projection of the object is made onto a television camera photocathode 9 at a constant scale independently of the position of the object both in the projection plane and normal to it. A usefully extended depth of focus, at constant scale, is obtained by thresholding the camera signal output. The measurements are made from the relative positions of object edge signals in the camera rastor 11.

Fig .1

## OBJECT MEASURING ARRANGEMENT

This invention relates to object measuring arrangements in which scanning provides two-dimensional measurements of the position and dimensions of a projection of an object imaged by an optical system upon an electronic image scanning device. In particular it relates to object measuring arrangements in which said measurements are substantially independent of the position of the object in three dimensions over a range of positions at least comparable with the object dimensions and preferrably several times the object dimensions. Such systems may be advantageously used to determine the relative positions and orientations of parts in the automatic assembly of three dimensional objects from piece parts.

Toolroom projectors are known in which a magnified profile of an object can be compared with a transparent outline drawing of the object on a projection screen. Such projectors are discussed in "Engineering Optics" by K.J. Habell and A. Cox, Pitman, London 1953 pp 255-263. In such projectors, collimated light is directed towards a projection lens past the object to provide a shadow-cast profile. The entrance pupil of the projection lens must be at least as large as the transverse dimension of the portion of the object to be viewed. Beyond the projection lens a stop is placed at the principal focal plane of the projection lens remote from the object. This stop is made substantially smaller than the projection lens entrance pupil and is customarily referred to as a telecentric stop. The effect of such a stop is to ensure that only those cones of rays arising from the object which have chief rays parallel to the projection lens axis are used for imaging and hence that variations in the observed profile of a three-dimensional object with variations in the position of the object transverse to the axis are avoided. Provided the telecentric stop reduces the relative aperture of the projection lens sufficiently, a small amount of depth of focus can be obtained to cope with profiles formed from parts of the object which are not all in a single plane normal to the axis.

A disadvantage arises if such a projector were to be used for automatic assembly of objects from piece-parts since the depth of focus obtainable would permit only very restricted axial motion of the object, whereas axial motions at least as great as the axial extent of the object are typically needed.

It is an object of the invention to provide an object measuring arrangement in which the measured size of the profile of an object remains substantially constant despite both transverse and axial motion of the object comparable with object dimensions. The invention provides an arrangement for making measurements, at constant scale, of the position and dimensions of a projection of an object displaceable parallel to and normal to the plane of projection, the arrangement comprising firstly an optical projection system comprising, in this order along an axis, the object, a first field lens, an objective lens to form a real image of the object, and an electronic image scanning device placed to scan said real image in a raster and produce a corresponding video signal, the objective lens aperture being placed in the principal focal plane of the first field lens, and secondly, a video signal processing device comprising means for generating object edge signals from said video signal and means for making said measurements from the positions of said edge signals relative to said raster. The video signal processing device may comprise means for storing the lowest and highest running values of the video signal, and means for applying the video signal to a threshold level at a predetermined position between said lowest and highest values to generate said edge signals when the video signal equals said threshold level.

Typically, the aperture of the field lens will be of the order of a hundred times the objective lens aperture, which typically will have a relative aperture of F/16. Since the electronic image scanning device, typically a television camera tube, can accept an input light level much lower than would be necessary when using a visual projection screen, such a value for the relative aperture of the objective lens can be tolerated and improved depth of focus obtained when compared with the toolroom projector.

Indeed, the objective lens can be stopped down until the diffraction limited blurr circle equals the resolution limit of the raster.

Since only light closely parallel to the axis is accepted by the system, an object illumination system may be used which is arranged to direct light from behind the object into the first field lens, said illumination system comprising a second field lens behind the object and a light source at the principal focal plane of said second field lens remote from the object. The second field lens may conveniently be a plastics replica fresnel lens. Alternatively, the object may be imaged by reflected light and then the illumination system may comprise a light source distributed around the periphery of the first field lens. Whether imaged by back light or reflected light, the system has a high immunity to interference by ambient illumination, since only light closely parallel to the axis is accepted. Back illumination has the advantage of giving a high contrast image suitable for easy processing to a binary (i.e. 2 valued) image.

The achievement of a more extended depth of focus is made possible by processing the video output waveform of the electronic image scanning device to determine the position of the object profile relative to the raster despite defocusing of the real image of the object at the scanning plane when substantial axial displacement of the object occurs. With back illumination, the video signal will have a low value within the profile of a solid object and a high value outside the profile, the transition between these values being relatively sharp when the real image is in focus on the scanning plane. On defocus, there is a more gradual transition from the high value immediately outside the profile to the low value immediately inside the profile. A threshold light level can be found between the high and low values which, on being attained on the transition between said high and low values, defines the geometrical outline of the object, and which depending on the variation of brightness across the defocused object profile as a function of the amount of defocusing, can be chosen to coincide closely with the object outline for a substantial range of defocusing. Typically, the threshold light level will be between 25 percent and 50 percent of the difference between the low and high values above the low value.

In many practical applications of the arrangement the electronic image scanning device may comprise a television pick-up tube having raster scanning by an electron beam of a photosensitive layer upon which the objective lens forms the image. Alternatively a solid state camera may be used comprising a two-dimensional array of selectively addressed photosensitive areas. The camera may also comprise a linear array of photosensitive areas mechanically scanned in the image plane transversely to the array length. These two latter alternatives have the advantage of mechanical stability of the scanned area.

One advantage of the arrangement is that it may be calibrated in a simple way to provide the relationship between the position of a point in the scanned area and the position of an associated line, extending outward from the field lens parallel to the optic axis, in what can be described as the world frame of reference in which the object is located. A reference object, for example a pointer, may be moved to known locations in the world frame of reference and the points in the scanned area corresponding to the associated parallel lines located with reference to a coordinate system in the scanned area. For example, if a vidicon camera tube is used, scanned by a conventional television raster, a line parallel to the optical axis in the world frame of reference may be associated with a numbered line in the raster and with a measured distance along that raster line.

An embodiment of the invention will now be described, by way of example with reference to the accompanying drawings, in which:

Figure 1 shows a schematic perspective view of the optical projection system of an object measuring arrangement,

Figure 2 shows a ray diagram of the image forming part of the optical system of Figure 1,

Figure 3 shows a video signal processing device forming part of the object measuring arrangement, and

Figure 4 shows some waveforms occurring in the device of Figure 3.

0031973

PHB 32683

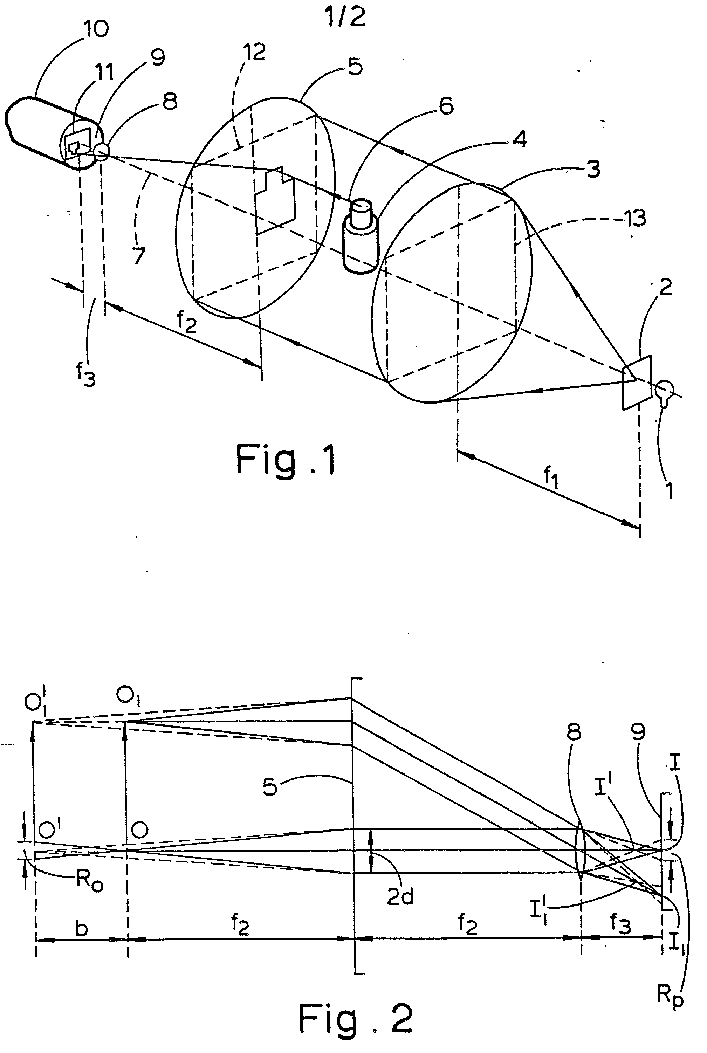

Referring to Figure 1 a tungsten filament lamp 1, illuminates a diffusing screen 2 to provide a small evenly illuminated area to act as a light source for the system. Screen 2 is placed at approximately the principal focal plane of a plastics replica fresnel lens 3 which hence acts as a collimating lens. The object 4 is shown as a cylindrical object having a cylindrical peg on its upper circular surface. Each point on object 4 is illuminated by a cone of rays having a solid angular subtense determined by the illuminated area of screen 2 and the focal length $f_1$ of lens 3. A second plastics replica fresnel lens 5, acting as the first field lens, is placed to intercept light passing object 4. The chief ray 6 of the cone of rays leaving the centre of the top of the peg is shown parallel to the axis 7, of the system. A vidicon television camera pick-up tube 10 is shown schematically with an objective lens 8 placed at the second principal focal plane of the field lens 5, forming a real image of object 4 on the photocathode 9 of tube 10. The rectangular scanned area 11 of the photocathode is shown schematically back-projected by objective 8 onto the field lens 5 as rectangle 12 and thence as the equal rectangle 13 on collimating lens 3 to illustrate the volume between lenses 3 and 5 available to accommodate objects and their movements during the course of assembly operations conducted on the objects.

The size of the working volume available between lenses 3 and 5 may be calculated as follows with reference to the ray diagram of Figure 2. Assuming that the camera photocathode 9 has been placed in the back focal plane of the objective lens 8, that is, that the camera has been focused for parallel light between lens 8 and the Fresnel lens 5 as shown in Figure 2 and hence on an object plane $OO_1$ in the principal focal plane of the Fresnel lens, the depth of focus in object space may be calculated as follows.

Referring to Figure 2, the defocussing effect obtained when the object is moved from the plane of best focus $OO_1$ through a distance b to a plane $O'O_1'$ can be viewed in two alternative ways. Either light from a circular patch of diameter Ro on the object is imaged as a point on the photocathode or a point on the object is imaged as a circular patch of diameter Rp on the photocathode, where:-

$$Ro = Rp \cdot \frac{f_2}{f_3} , \qquad\qquad\qquad\qquad\qquad I$$

where $f_2$ is the focal length of the Fresnel lens, $f_3$ is the focal length of the objective lens and $f_3/f_2$ is the transverse magnification m. Formula I enables the size of defocussed blurr patches to be transferred from the photocathode to object space or vice-versa.

From similar triangles in Figure 2,

$$\frac{Ro}{b} = \frac{2d}{f_2}$$

from which $b = \dfrac{Rof_2}{2d}$ \qquad\qquad\qquad\qquad\qquad II

where 2d equals the diameter of the objective lens aperture. Thus, the depth of focus $\pm b$ which can be obtained is proportional to the greatest value of the Ro which can be tolerated.

A limiting value for the aperture of the objective lens, $2d_{lim}$ can be arrived at by arranging that the diameter of the focussed diffraction limited blurr patch, or Airy disc, at the photocathode is no smaller than the raster can resolve. This gives a limiting value, Rplim, for the patch diameter. For example if a 625 line raster is used,

$$Rplim \not< \frac{Hi}{575} \qquad\qquad\qquad\qquad\qquad III$$

where Hi is the raster height and 575 is the number of active lines in that height.

The radius r of the first dark ring of the Airy disc is given by -

$$r = 1.22 \lambda \frac{f_3}{2d} ,$$

where $\lambda$ is the wavelength of light used. This radius also equals the diameter of the central maximum of the Airy disc taken between points having an intensity 35% of that of the central maximum, and this is taken herein as representing the effective diameter of the Airy disc. Thus,

$$Rplim = 1.22 \lambda \frac{f_3}{2\, d_{lim}} \qquad\qquad\qquad\qquad IV$$

and $Rolim = Rplim \cdot \dfrac{f_2}{f_3}$

From equations III and IV

$$2d_{lim} = \frac{1.22\ \lambda\ f_3 \cdot 575}{Hi} \qquad\qquad V$$

and by applying equations I, III and IV to equation II,

$$b_{lim} = \frac{1}{1.22\lambda}\left[\frac{Hi\ f_2}{575f_3}\right]^2 \qquad\qquad VI$$

Equation VI gives the greatest depth of focus, $\pm\,b_{lim}$ which can be obtained without waveform thresholding and equation V gives the corresponding objective aperture, $2d_{lim}$.

Assuming a desired height, Ho, of the field of view in object space, $f_2$ is given by:-

$$f_2 = \frac{Ho}{Hi} \cdot f_3$$

The improvement in depth of focus obtainable may be calculated when Ro is allowed to increase and the object edge position recovered by thresholding the camera waveform. Practical thresholding methods rely on the object being of sufficient width and separated from other objects by a sufficient distance to allow the video waveform to reach its full maximum value between objects and its full minimum value within the object. Thus Ro cannot be allowed to rise beyond the minimum width of the object and preferrably not beyond 0.8 times this minimum width. For most practical objects this will give a value of Ro, and hence of the depth of focus $\pm b$, which will be several times greater than that set by equation VI.

In the event that objects of considerable minimum width are measured, the limit to the amount of defocussing which can be tolerated will be set by the minimum change in wave form grey level which can be resolved by the thresholding device. If the change in waveform level between the low and high value is digitised into 32 levels, for example, the minimum resolvable change will be one level and hence a maximum value of Ro will be given by:-

Romax = 32 Rolim

An example of the numerical values of parameters in a typical system will now be given. Starting from Hi = 6.6mm and $f_3$ = 17mm,

Rplim = 0.0115mm and hence $2d_{lim}$ = 1mm. Assuming Ho = 100mm to be desired, $f_2$ becomes 260mm whence Rolim = 0.15mm and the depth of focus is ± 39mm. Assuming a minimum width of object of 1.0mm, Ro rises to 0.8 mm and the depth of focus, b, increases to ± 206mm. Further, if the minimum object width is much larger and the waveform is digitised into 32 levels, Romax becomes 4.8mm and b rises to ± 1240mm.

The position of best focus, i.e. the centre of the working volume may be moved along the optic axis relative to the Fresnel lens by changing the position of the photocathode 9 relative to the objective lens 8 while maintaining the separation between lenses 5 and 8 constant at $f_2$ to preserve the constancy of object projected size with object axial motion within the working volume. The depth of focus will increase or decrease slightly as O is moved away from or towards lens 5 respectively. As O is moved away from lens 5 by moving photocathode 9

towards lens 8 the transverse magnification decreases. Ultimately, O reaches a sufficient distance from 5 that the first virtual image formed by 5 will be formed so close behind 8 that the real image formed by 8 will be inaccessible to the photocathode and this will set a limit to the furthest distance that the working volume can be from the Fresnel lens. For example, if the closest separation of 8 and 9 is $f_3/2$, then at this separation the transverse magnification is halved, the virtual image formed by the Fresnel lens is at the principal focal plane of the camera lens and it can be shown that in this case the plane of best focus in the object space is at a distance t from the fresnel lens given by:-

$$t = \frac{f_2^2}{f_3}$$

In the numerical example above, t = 4.0 metres.

It will be seen that the effectiveness of the processing of the camera video waveform to recover defocused image detail has a marked effect on the degree of defocusing which can be allowed and hence on the size of the working volume.

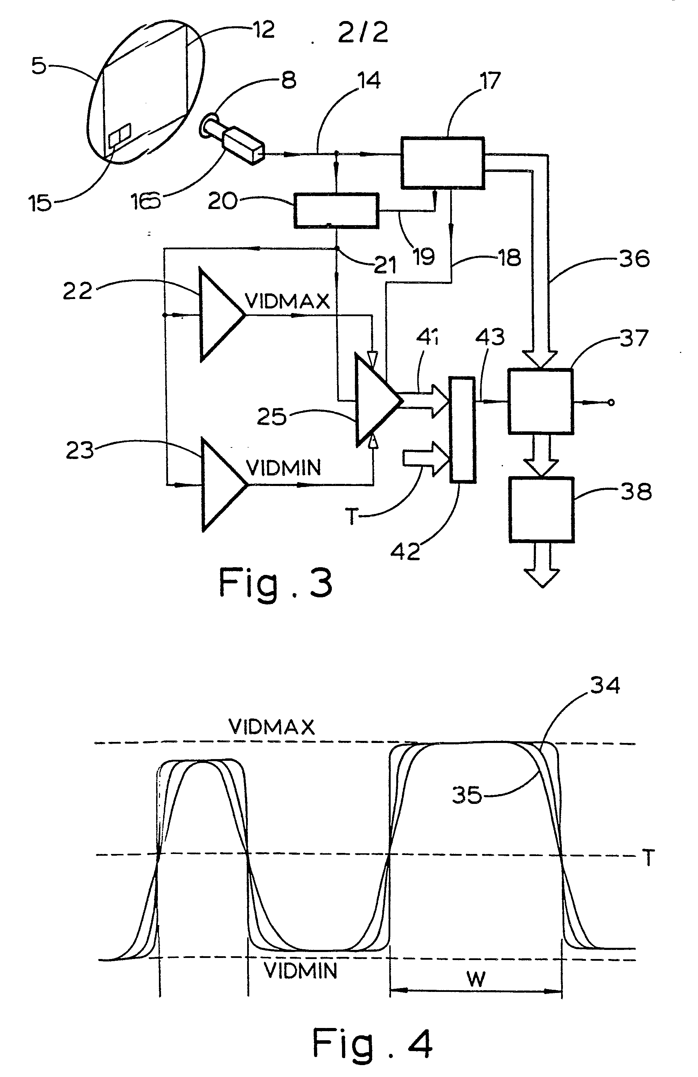

Referring to Figure 3, a block schematic circuit is shown for processing the camera video waveform and Figure 4 shows typical focussed and defocussed wave forms processed by the circuit of Figure 3. For simplicity, only the back-projected scanned area 12 is shown on the field lens 5. Peak white and peak black areas 15 are shown occupying a corner of the scanned area 12 away from the working area. The television camera 16, with objective lens 8, is provided with automatic gain control (A.G.C.) so that the video signal corresponding to peak white area 15 will be stabilised largely independently of the light level in use in the scanned area. Alternatively, the peak white area 15 may be omitted and the peak white value occuring in the scanned area may operate the camera A.G.C. circuit.

The video signal 14 complete with line and frame synchronization pulses is applied to an address and clock pulse generator 17. In this example a 625 line 50 Hz raster is employed, the valid picture area of which comprises a rectangle having a 4 x 3 aspect ratio of 575 lines, only 51.95 μs of the 64 μs line period being available for picture information. To enable a computer to be programmed to make measurements on the object profile, the valid picture area is divided into discrete picture elements (pixels) each having a digital address,and the value of the video signal for each pixel is produced by thresholding to a binary value. Such a picture will be referred to as a binarized picture. To provide square pixels each line is divided into 768 samples at a sampling rate of 14.8 MHz. Generator 17 provides the sampling pulses in a clock pulse train 18 locked to the video synchronisation pulses. Generator 17 also provides a signal 19, present only during the valid picture area, which is applied to gate 20 to which the video signal 14 is applied and from which a valid video signal 21, devoid of blanking and synchronisation signals, is available. Signal 21 is applied to peak follower 22 and to trough follower 23 from which quasi - d.c. signals VIDMAX and VIDMIN respectively are obtained.

Referring to Figure 4, which shows part of the valid video signal obtained during one line of picture in which an opaque object is scanned against a bright background, typical waveforms and d.c. levels are shown. For convenience it is often desirable to use only a binary representation of this waveform. To this end a threshold level T is selected between the VIDMAX and VIDMIN levels for binarizing the picture. In this embodiment the video signal is digitised in an analogue-to-digital converter (ADC)25 before the threshold level T is applied as a digital operation.

The A.D.C. 25 digitises the instantaneous value of the video signal 21 lying between the values VIDMAX and VIDMIN into a 5 bit binary number 41 latched for the period of one pixel i.e. 67.8 nsec by clock pulses 18. To achieve digitisation at the picture element rate of 14.8 MHz, the A.D.C. 25 compares the video waveform slice simultaneously with 32 equally spaced d.c. levels derived from a potentiometer chain connected between VIDMAX and VIDMIN to determine that adjacent pair of levels between which the video signal lies and encodes the result as a parallel 5 bit Gray code to avoid encoding errors at the transition between levels. The Gray code output is clocked into a latching store at the picture element rate, from which, between clock pulses, it is in turn converted in parallel to a pure binary output 41. Thus variations in the range of video signal 14, caused by variation in the light output of source 1 for example and not removed by the camera AGC do not cause any variation in the digitised video signal since there will be proportionate variations in the separation of VIDMIN and VIDMAX.

The position of the edge of the object referred to the raster is determined by applying a digital threshold T to the digitised video signal 41 in a digital comparator 42 which outputs a binary video signal 43. The selection of the value of T may be made by moving a test object axially in the optical system and adjusting T so that the binarized width of the object remains as constant as possible throughout the desired range of axial motion of the object. By way of example, Figure 4 shows defocused waveforms 34 and 35 with a value of t, one half of the way from the lowest value to said highest value.

When it is required to measure the position of, for example, a spherical object, the coordinates obtained for the centre of the projected circle will be independent of the threshold. For example, a low threshold may give rise to a larger measured circle, but the centre coordinates, given by the mean of the position of the edges, are constant. Thus, in automatic assembly operations where the outline and size of the object are known and it is only required to orientate and position the object rather than measure its size the exact position of the threshold may not be so important. However, as part of an assembly operation, it may be necessary to identify a part of an object, for example a hole, by measuring its size. In this case the threshold may be set in a calibration operation in which an object of known dimensions is introduced into the working volume and the threshold adjusted manually or automatically until a measured dimension of the object equals the known value of that dimension, due allowance being made for the known and constant magnification factor of the optical system. The object used for calibration may be a test object or part of a component involved in the subsequent assembly operation, in which case recalibration may be carried out automatically between assembly operations during a production run.

Referring again to Figure 3, at each pixel pulse 18, the address generator 17 provides the address 36 for that pixel. The value of the pixel is associated ──────── ──────── ────────

with its address in unit 37 and loaded into a computer store, not shown, via a first-in-first-out (FIFO) store 38. The FIFO store comprises a shift register in which data may be held or clocked in or out at different rates. The FIFO acts as a rate equalising loading buffer between the T.V. raster pixel rate and the computer store loading rate. The FIFO is filled during one line of the T.V. raster and is emptied by the computer before the next T.V. line arrives. The measurement of the object is then carried out in the computer by a suitable programme which, for example, computes the difference in edge addresses to find the object width and computes the address of the centre of the object to find its position relative to the projected raster edge.

Returning to methods of selecting the threshold level, this level may be set from the results of an analysis of the video signal as it is obtained. For example, a histogram may be formed relating the amplitude of picture element samples to the relative frequency with which such amplitudes occur. If then two peaks in this histogram occur which are separated by a region of amplitude which are of relatively infrequent occurrence, the threshold level may be set in the middle of this region. Such methods of threshold level selection are described in British Patent Specification No.1,117,170.

CLAIMS:

1. An arrangement for making measurements, at constant scale, of the position and dimensions of a projection of an object displaceable parallel to and normal to the plane of projection, the arrangement comprising firstly, an optical projection system comprising, in this order along an axis, the object, a first field lens, an objective lens to form a real image of the object, and an electronic image scanning device placed to scan said real image in a raster and produce a corresponding video signal, the objective lens aperture being placed in the principal focal plane of the first field lens, and secondly, a video signal processing device comprising means for generating object edge signals from said video signal and means for making said measurements from the positions of said edge signals relative to said raster.

2. An arrangement as claimed in Claim 1 wherein said video signal processing device comprises means for storing the lowest and highest running values of the video signal, and means for applying the video signal to a threshold level at a predetermined position between said lowest and highest values to generate said edge signals when the video signal equals said threshold level.

3. An arrangement as claimed in Claim 2 comprising, means for digitising the video signal at intervals during each line scan of the raster to one of a predetermined number of signal levels lying between said lowest and highest values, said threshold level being correspondingly digitised, and means for generating said object edge signals by comparison of said digitised video signal with said digitised threshold level.

4. An arrangement as claimed in any one of the preceding claims wherein said first field lens is a fresnel lens.

5. An arrangement as claimed in any one of the preceding claims wherein an illumination system is provided arranged to direct light from behind the object into said first field lens, said illumination system comprising a second field lens behind the object and a light source at the principal focal plane of said second field lens remote from the object.

6. An arrangement as claimed in any one of Claims 1 to 4 inclusive comprising an illumination system arranged to direct light onto the object from the direction of the first field lens, said illumination system comprising a light source distributed around the periphery of the first field lens.

7. An arrangement as claimed in Claim 5 wherein said second field lens is a fresnel lens.

8. An arrangement as claimed in any one of the preceding claims wherein the electronic image scanning device comprises a television image pick-up tube.

9. An arrangement substantially as described with reference to the accompanying drawings.

0031973

1/2

Fig .1

Fig . 2

1-II PHB. 32683.

0031973

Fig. 3

Fig. 4